# EUROPÄISCHE PATENTSCHRIFT

(11) **EP 0 987 650 B1**
(45) Veröffentlichungstag und Bekanntmachung des Hinweises auf die Patenterteilung: **15.09.2004**
(21) Anmeldenummer: 98117696.9
(22) Anmeldetag: 18.09.1998
(51) Int. Cl.: G06K 17/00, G06K 1/12

(54) **Verfahren und Vorrichtung zum Applizieren eines Bildes auf einen Träger**
Method and apparatus for applying an image to a carrier
Procédé et dispositif pour l'application d'une image sur un support

(43) Veröffentlichungstag der Anmeldung: 22.03.2000
(73) Patentinhaber: Dynatrends AG, 9500 Wil (CH)
(72) Erfinder: Oertle, Erwin, 9100 Herisau (CH); Müller, Rainer, 9500 Wil (CH)
(74) Vertreter: Wenger, René

(56) Entgegenhaltungen:
- WO-A-93/12509
- WO-A-95/22135
- US-A- 4 991 205

## Beschreibung

Die Erfindung betrifft ein Verfahren und eine Vorrichtung zum Applizieren eines Bildes auf einen Träger, zum Beispiel ein Bild eines Benutzers auf ein Dokument.

Es ist für viele verschiedene Anwendungsbereiche bekannt, Dokumente, Ausweise, Zutrittskarten oder ähnliches mit dem Bild des Besitzers des Dokumentes zu versehen. Besonders häufig ist dies der Fall bei Ausweisen wie Pässen, bei Kreditkarten aber auch bei Abonnementen für Skilifte oder für den öffentlichen Verkehr.

Üblicherweise verfügen Stellen, die solche Dokumente ausgeben über Fotoautomaten, in welchen der Benutzer Passbilder anfertigen lassen kann. Die Passbilder werden nach herkömmlichem Fotografierverfahren unter Verwendung von Chemikalien im Fotoautomat hergestellt.

Die das Dokument ausgebende Stelle muss anschliessend die Passbilder ausschneiden und auf die entsprechenden Dokumente aufkleben.

Zum Beispiel bei Schaltern von Skigebieten kann diese Arbeit zu unerwünschten Verzögerungen führen. Ausserdem besteht bei derart aufgeklebten Passbildern das Risiko, dass das Bild des berechtigten Inhabers des Dokumentes durch ein anderes Bild ausgetauscht wird. Deshalb werden solche Dokumente üblicherweise mit einem Sicherheitsstempel versehen, der den Austausch des Bildes erschweren soll. Dieser Stempel bedeutet jedoch einen zusätzlichen Arbeitsaufwand.

Ausserdem ist es bekannt, digitalisierte Bilder auf Kreditkarten, Identitätskarten oder ähnliche Kunststoffkarten aufzudrucken. Gemäss WO 93 12509 wird eine Folographie digital erzeugt und Zusammen mit einem lesbaren Code ausgedruckt. Aus US 4 991 205 ist ein identifikätionssystem bekannt, bei dem ein Videobild betreffende informationen zwecks Authentizierung gespeichert sind.

Es ist deshalb eine Aufgabe der vorliegenden Erfindung, die Nachteile des Bekannten zu vermeiden, insbesondere also ein Verfahren und eine Vorrichtung zum Applizieren eines Bildes auf einen Träger zu schaffen, welche ein rasches, wirtschaftliches und einfaches Aufbringen des Bildes erlauben, welche die Verwendung von Chemikalien reduzieren oder ausschliessen und welche trotzdem hohen Sicherheitsstandards genügen. Erfindungsgemäss werden diese Aufgaben mit einer Vorrichtung und mit einem Verfahren mit den Merkmalen der unabhängigen Patentansprüche gelöst.

Zum Applizieren des Passbildes auf ein Dokument wie beispielsweise ein Abonnement, wird zuerst ein digitales Bild erzeugt. Vorrichtungen zum Erzeugen von digitalen Bildern sind an sich bekannt. So können digitale Fotokameras oder auch Videokameras verwendet werden. Der Vorteil bei der Verwendung von Videokameras liegt darin, dass der Benutzer ein bewegtes Bild von sich selbst verfolgen kann und zum gewünschten Zeitpunkt das Bild einfrieren kann.

Das auf diese Weise erzeugte digitale Bild wird in einem weiteren Schritt auf einem vorzugsweise zentralen Speichermedium abgelegt. Anschliessend wird ein für das digitale Bild eindeutiger, einzigartiger Identifikationscode erzeugt und dem Bild zugeordnet. Anschliessend wird der Code dem Benutzer mittels Codeausgabemitteln ausgegeben. Die Erzeugung des digitalen Bildes sowie die Ausgabe des Codes erfolgen in einer Aufnahmevorrichtung. Die Speicherung des Bildes und die Erzeugung des Codes können in einer zentralen Kontrollanordnung aber auch in der Aufnahmevorrichtung erfolgen. Diese Aufnahmevorrichtung gleicht im wesentlichen einem bekannten Fotoautomaten, weist aber eine digitale Bilderfassungsanordnung auf und kann vollständig auf den Einsatz von Chemikalien verzichten.

Die Ausgabe des mit dem Bild versehenen Dokumentes erfolgt in einer Dokumentenausgabevorrichtung. Die Dokumentenausgabevorrichtung befindet sich typischerweise bei der das Dokument ausstellenden Stelle, d.h. beispielsweise an einem Schalter für einen Skilift oder in einem Passbüro. In einem ersten Schritt zur Ausgabe des Dokumentes wird der vorangehend durch die Aufnahmevorrichtung ausgegebene Identifikationscode mit einer Erfassungsanordnung erfasst, insbesondere in die Dokumentenausgabevorrichtung eingelesen. Aufgrund des Identifikationscodes liest die Dokumentenausgabevorrichtung in einem zweiten Schritt das dem Identifikationscode zugeordnete digitale Bild vom zentralen Speichermedium ein. Die Dokumentenausgabevorrichtung besteht typischerweise aus einem Rechner, welcher mit einem Drucker versehen ist. Der Rechner kann auf das zentrale Speichermedium, beispielsweise eine Festplatte oder andere Datenträger zugreifen und das digitalisierte Bild an den Drucker weitergeben.

Das Applizieren des digitalen Bildes auf einen Träger, beispielsweise Papier oder Kunststoff, beendet das erfindungsgemässe Verfahren.

In einem bevorzugten Ausführungsbeispiel werden gleichzeitig mit dem digitalen Bild auf dem Träger andere Informationen aufgebracht. Insbesondere werden Daten des berechtigten Inhabers, beispielsweise Namen oder Gültigkeitsdauer eines Abonnements auf den Träger aufgebracht, insbesondere aufgedruckt.

Das erfindungsgemässe Verfahren weist verschiedene Vorteile auf. So können die digitalisierten Bilder ohne grossen Aufwand in genau der gewünschten Grösse auf einer genau definierten Stelle des Trägers aufgedruckt werden. Der Aufwand für den Benutzer und für die ausgebende Stelle ist daher minimal und die Fehlerquote klein. Dank dem Code ist jederzeit sichergestellt, dass das richtige digitalisierte Bild ausgegeben wird. Ausserdem ist auch die Fälschungssicherheit gross. Weil das Bild direkt auf das Dokument aufgebracht wird, ist der Ersatz durch ein anderes Bild nicht oder nur schwierig realisierbar.

Üblicherweise wird das Bild aufgedruckt, beispielsweise mit einem Thermodrucker, einem Tintenstrahlfarbdrucker oder auch mit einem Laserdrucker. Es sind aber auch andere, optische Verfahren denkbar.

Der Identifikationscode wird vorzugsweise als maschinenlesbarer Code ausgegeben. Dabei sind vorteilhaft ein Bar-code, ein maschinell erkennbarer Zahlencode oder auch magnetische, elektromagnetische oder elektrooptische Codes denkbar, welche von entsprechenden Lesegeräten erkannt werden können. Es ist aber auch denkbar, den Code als Zahlencode auf einem Bildschirm in der Aufnahmevorrichtung anzuzeigen. Der Benutzer muss sich dann einzig den Code merken und der das Dokument ausgebenden Stelle diesen Code mitteilen.

In einem weiteren bevorzugten Ausführungsbeispiels wird das digitale Bild in der Aufnahmevorrichtung als Videobild auf einem Monitor angezeigt. Der Benutzer kann dabei selbst den Zeitpunkt wählen, in dem das Bild abgespeichert werden soll.

Das erfindungsgemässe Verfahren ermöglicht ausserdem, auf dem Dokument Verifikationscodes aufzubringen. Der Verifikationscode codiert bestimmte Merkmale des Bildes. Denkbar sind beispielsweise Hintergrundfarben, biometrische Parameter (Augenfarbe des Benutzers/typische Abstände oder Proportionen im Gesicht des Benutzers) oder auch ein unsichtbarer oder schlecht sichtbarer, dem Bild hinterlegter Code. Der Vergleich des Verifikationscodes mit den Merkmalen des Bildes erlaubt eine Authentizierung des Dokumentes. Dabei wird die Sicherheit des Dokumentes zusätzlich erhöht.

Der Identifikationscode wird in die Dokumentenausgabevorrichtung beispielsweise mit einem Scanner (handelsübliche Infrarotscanner), einem magnetischen, elektromagnetischen oder elektrooptischen Leser (beispielsweise Diskettenlaufwerke/Chiplesevorrichtungen oder CD-Leser) oder auch mit einem Keybord erfasst.

Vorteilhaft werden die digitalisierten Bilder auf einem zentralen Speichermedium gespeichert, das räumlich getrennt von der Aufnahmevorrichtung und auch räumlich getrennt von der Dokumentenausgabevorrichtung angeordnet ist. Dies ermöglicht, gleichzeitig von mehreren Aufnahmevorrichtungen und mehreren Dokumentenausgabevorrichtungen Zugriff auf ein einziges Speichermedium zu nehmen. Dabei können mehrere Kassen und Fotoautomaten verwendet werden. In diesem Fall wird das digitale Bild zwischen der Aufnahmevorrichtung, dem zentralen Speichermedium und der Dokumentenausgabevorrichtung über Datenleitungen übertragen. Es ist auch eine drahtlose Übertragung möglich. Es ist auch denkbar, die Bilder in der Aufnahmevorrichtung zu speichern. Der Identifikationscode bestimmt dann gleichzeitig den Speicherort, das heisst die spezifische Aufnahmevorrichtung in der sich das Bild befindet.

In einem weiteren Ausführungsbeispiel befindet sich das zentrale Speichermedium bei einer zentralen Registrierungsstelle. Ein Benutzer kann mit einem Identifikationscode ein und das selbe Bild für verschiedene Dokumente aufdrucken lassen, beispielsweise gleichzeitig für einen Pass, ein Abonnement und eine Kreditkarte. Die Dokumentenausgabevorrichtungen der einzelnen Ausgabestellen greifen jeweils auf das gleiche zentrale Speichermedium zurück.

Die Vorrichtung zum Ausführen des erfindungsgemässen Verfahrens besteht im wesentlichen aus wenigstens einer Aufnahmevorrichtung zum Erzeugen eines digitalen Bildes und aus wenigstens einer Dokumentenausgabevorrichtung zum Applizieren des digitalen Bildes auf einem Träger.

Die Aufnahmevorrichtung weist Mittel zum Erzeugen des digitalen Bildes, ein Speichermedium zum Speichern des digitalen Bildes, Mittel zum Erzeugen und Zuordnen eines für das digitale Bild eindeutigen Identifikationscodes sowie Mittel zur Ausgabe des Identifikationscodes auf. Das Speichermedium braucht räumlich nicht am gleichen Ort angeordnet zu sein wie die Aufnahmevorrichtung, muss aber mit den übrigen Komponenten der Aufnahmevorrichtung verbunden oder verbindbar sein.

Die Dokumentenausgabevorrichtung besteht im wesentlichen aus einer Erfassungsanordnung zum Erfassen des Identifikationscodes, aus Mitteln zum Einlesen des dem Identifikationscode zugeordneten digitalen Bildes sowie aus Mitteln zum Aufbringen des digitalen Bildes auf einen Träger.

Die Erfassungsanordnung zum Erfassen des Identifikationscodes ist typischerweise ein Bar-Code-Scanner. Die Lesemittel zum Einlesen des Bildes in die Dokumentenausgabevorrichtung bestehen typischerweise aus einem handelsüblichen Rechner und die Mittel zum Auftragen des Bildes können aus einem handelsüblichen Drucker bestehen.

Der Identifikationscode wird in der Aufnahmevorrichtung typischerweise ebenfalls auf einem Drucker ausgegeben. Eingesetzt werden beispielsweise Kassenzetteldrucker, welche im Betrieb zuverlässig und wirtschaftlich sind. Der Identifikationscode wird als Zahlenfolge, Bar-code oder ähnlichem ausgedruckt.

Denkbar sind aber auch andere Ausgabevorrichtungen, insbesondere Schreibgeräte, welche Daten in elektronischer Form auf einen Datenträger ablegen.

Die Aufnahmevorrichtung kann gleichzeitig einen Monitor zum Anzeigen des Bildes aufweisen.

Die Aufnahmevorrichtung und die Dokumentenausgabevorrichtung sind direkt oder indirekt (beispielsweise über das Speichermedium) miteinander verbunden oder verbindbar. Denkbar sind festinstallierte Datenleitungen, aber auch bei Bedarf erzeugte Verbindungen über Telefonleitungen oder drahtlose Verbindungen. Für gewisse Anwendungen ist es denkbar, dass Aufnamevorrichtung und Dokumentenausgabevorrichtung räumlich zusammenfallen.

Die Erfindung wird im Folgenden in Ausführungsbeispielen und anhand der Zeichnungen näher erläutert. Es zeigen:
- Figur 1: eine schematische Darstellung einer erfindungsgemässen Vorrichtung mit einer Aufnahmevorrichtung und einer Dokumentenausgabevorrichtung und
- Figur 2: eine schematische Darstellung eines erfindungsgemäss hergestellten Dokumentes.

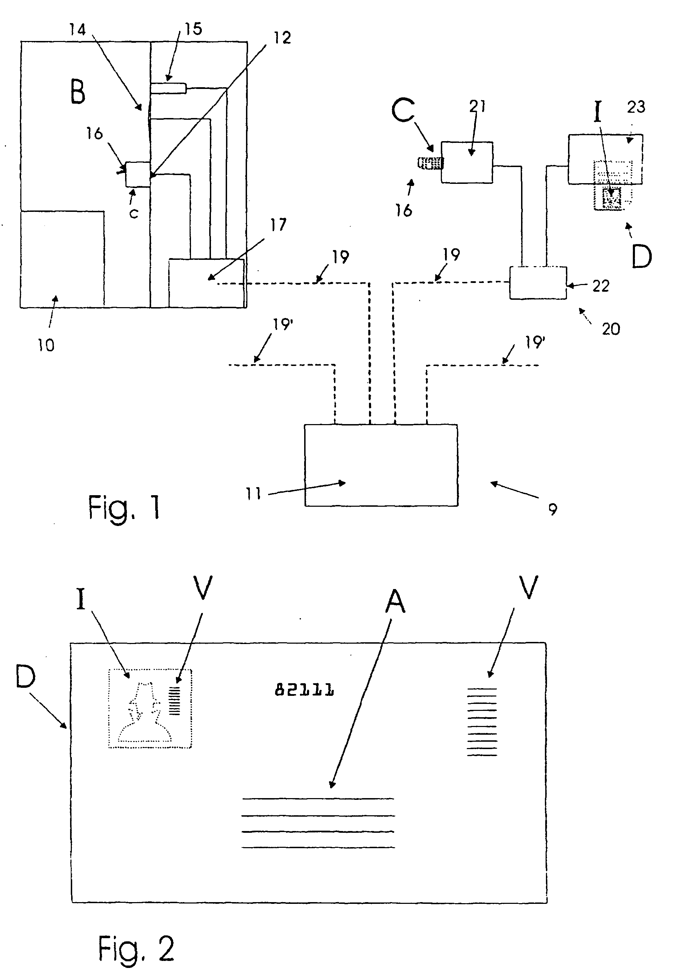

In Figur 1 ist schematisch eine Vorrichtung 9 zum Applizieren eines Bildes auf ein Dokument D gezeigt.

Die Vorrichtung 9 besteht im wesentlichen aus einer Aufnahmevorrichtung 10 und einer Dokumentenausgabevorrichtung 20. Die Aufnahmevorrichtung 10 und die Dokumentenausgabevorrichtung 20 sind über schematisch dargestellte Datenleitungen mit einem zentralen Speichermedium 11 verbunden. Das zentrale Speichermedium 11 kann auch Bestandteil entweder der Aufnahmevorrichtung 10 oder der Dokumentenausgabevorrichtung 20 sein. In diesem Fall verbindet eine Datenleitung die Aufnahmevorrichtung 10 und die Dokumentenausgabevorrichtung 20 direkt miteinander.

In Figur 1 sind schematisch weitere Datenleitungen 19' gezeigt, welche das zentrale Speichermedium 11 mit weiteren nicht dargestellten Aufnahmevorrichtungen bzw. Dokumentenausgabevorrichtungen verbinden. Die Aufnahmevorrichtung 10 besteht im wesentlichen aus einer digitalen Kamera 15, einem Drucker 12 und aus einer Rechneranordnung 17, welche mit dem Drucker 12 und der Kamera 15 verbunden ist. Die Aufnahmevorrichtung 10 ist ausserdem mit einem Monitor 14 versehen, welcher ebenfalls mit der Rechneranordnung 17 verbunden ist.

Die Aufnahmevorrichtung 10 ist ansonsten in der Art einer üblichen Kabine eines Fotoautomaten ausgebildet. Sobald der Benutzer B in der Aufnahmevorrichtung Platz nimmt und die Aufnahmevorrichtung, beispielsweise durch Einwurf eines Geldstückes, in Betrieb setzt, wird die Position des Benutzers erfasst und die Rechneranordnung 17 gibt der Kamera 15 den Befehl zur Aufnahme eines Bildes. Die Kamera 15 kann als digitale Fotokamera oder auch als Videokamera ausgebildet sein. In Kombination mit dem Monitor 14 ist in Figur 1 die Kamera 15 als Videokamera ausgebildet. Die Kamera 15 liefert das Bildsignal an die Rechneranordnung 17, welche das erfasste Bild auf dem Monitor 14 anzeigt. Sobald der Benutzer B mit dem angezeigten Bild zufrieden ist, kann er das bewegte Bild einfrieren wobei ein digitales Bild erzeugt und anschliessend abgespeichert wird.

Die Rechneranordnung 17 legt das digitale Bild auf dem zentralen Speichermedium 11 ab. Gleichzeitig generiert die Rechneranordnung 17 einen für das digitale Bild eindeutigen Identifikationscode C und ordnet diesen dem Bild auf dem Speichermedium 11 zu. Dieser Identifikationscode C wird von der Rechneranordnung 17 auf einen Drucker 12 gegeben, welche den Identifikationscode C auf einen Papierstreifen 16 aufdruckt. Die Bedienung der Aufnahmevorrichtung 10 kann über den Monitor 14 erfolgen, welcher als Touch-Screen ausgebildet sein kann. Es sind aber auch andere Bedienungen, z.B. über Tastenfelder denkbar.

Die Dokumentenausgabevorrichtung 20 besteht im wesentlichen aus einem Dokumentendrucker 23 zur Ausgabe eines Dokumentes D welches mit dem Bild I eines Benutzers versehen ist.

Die Dokumentenausgabevorrichtung 20 weist ausserdem einen Scanner 21 zum Einlesen des auf dem Streifen 16 aufgedruckten Identifikationscodes C auf. Der Identifikationscode C wird vom Scanner 21 erfasst und an eine Rechneranordnung 22 weitergeleitet. Die Rechneranordnung 22 greift auf das zentrale Speichermedium 11 zu und liest das dem Identifikationscode C eindeutig zugeordnete digitale Bild von dem zentralen Speichermedium 11 ein. Die Rechneranordnung 22 steuert anschliessend den Ausdruck des digitalen Bildes I, welches dem Identifikationscode C zugeordnet ist, auf dem Drucker 23.

Die Rechneranordnung 22 kann ausserdem nicht gezeigte Eingabemittel ausweisen, welche die Bedienung erlauben und auch die Eingabe von zusätzlichen Daten ermöglichen. Gleichzeitig mit dem digitalen Bild I können damit weitere Daten auf dem Dokument D aufgedruckt werden.

Das zentrale Speichermedium 11 ist beispielsweise eine magnetische Speicherplatte oder ein Bandlaufwerk. Es sind aber auch optische Datenträger denkbar. Das Speichermedium 11 kann als zentraler Server mit einer Rechneranordnung ausgebildet sein. Dabei kann die gesamte Vorrichtung 9 auf dem Client-Server-Prinzip basieren, wobei die Aufnahmevorrichtung 10 und die Dokumentenausgabevorrichtung 20 als Client eingesetzt sind.

Selbstverständlich kann auch die Aufnahmevorrichtung 10 zusätzlich mit Eingabemitteln versehen sein. Dabei können beispielsweise benutzerspezifische Daten vom Benutzer direkt eingegeben werden.

Figur 2 zeigt schematisch ein Dokument D, welches mit dem erfindungsgemässen Verfahren hergestellt worden ist. Das Dokument D weist eine Beschriftung A auf und ist mit einem Bild I versehen, welches das Portrait des Benutzers bzw. Inhabers des Dokumentes D wiedergibt. Im Ausführungsbeispiel gemäss Figur 2 ist dem Bild ein Verifikationscode V hinterlegt. Der Verifikationscode V ist gleichzeitig auf dem Dokument D aufgetragen. Ein Vergleich der beiden Codes ermöglicht Authentizierung des Dokumentes.

Die auf dem Dokument D aufgebrachte Beschriftung A kann Namen, Personalien oder ähnliches beinhalten. Diese Angaben können durch Eingabemittel in der Dokumentenausgabeanordnung 20 oder in der Aufnahmevorrichtung 10 in das System eingegeben werden.

Das erfindungsgemässe System besteht aus verschiedenen Komponenten, welche an sich dem Fachmann bekannt sind. Grundsätzlich sind beliebige solche bekannte Vorrichtung einsetzbar. Beispielsweise können die folgenden Komponenten verwendet werden:
- Typ der Kamera: Mitsubishi CCD - 400E
- Typ des Codedruckers: Belegdrucker für Thermopapier 0663.0001
- Art der Grafikkarte: ELSA Winner 2000 Office
- Art des Scanners: Barcode-Verfahren
- Art des Druckers: Thermosublimationsverfahren Mitsubishi CP-710
- Art der Datenverbindung: Koaxial- oder Glasfaserleitung, Zweidrahtleitung
- Art des Bildschirms: Top Touche Operator Panel 10,4"-VGA

## Patentansprüche

1. Verfahren zum Applizieren eines Bildes auf einen Träger, vorzugsweise auf ein Dokument (D), mit den folgenden Verfahrensschritten in der gegebenen Reihenfolge:
- Erzeugen eines digitalen Bildes mittels einer Aufnahmevorrichtung (10),
- Speichern des digitalen Bildes in einem Speichermedium (11), auf welches sowohl die Aufnahmevorrichtung (10) als auch eine Dokumentenausgabevorrichtung (20) Zugriff besitzt.
- Erzeugen und Zuordnen eines für das digitale Bild einzigartigen Identifikationscodes (C)
- Ausgeben des Identifikationscodes (C) mittels Codeausgabemitteln (12)
- Erfassen des ausgegebenen Identifikationscodes (C) mit einer Erfassungsanordnung (21) in der Dokumentenausgabevorrichtung (20)
- Einlesen des dem Identifikationscode (C) zugeordneten digitalen Bildes vom Speichermedium (11) in die Dokumentenausgabevorrichtung (20)
- Applizieren des eingelesenen digitalen Bildes (I) auf den Träger mittels der Dokumentenausgabevorrichtung (20).

2. Verfahren nach Anspruch 1, **dadurch gekennzeichnet, dass** das digitale Bild (I) auf dem Träger aufgedruckt wird, wobei vorzugsweise gleichzeitig ein zusätzlicher Druck (A) auf dem Träger aufgebracht wird.

3. Verfahren nach einem der Ansprüche 1 oder 2, **dadurch gekennzeichnet, dass** der Identifikationscode (C) als Bar-code, Zahlencode ausgedruckt oder als Zahlencode an einem Bildschirm angezeigt oder als magnetischer oder elektromagnetischer oder elektrooptischer Code auf einem Datenträger ausgegeben wird.

4. Verfahren nach einem der Ansprüche 1 bis 3, **dadurch gekennzeichnet, dass** das digitale Bild in der Aufnahmevorrichtung (10) als Videobild auf einem Monitor (14) angezeigt wird, wobei der Zeitpunkt zum Speichern eines gewünschten Bildes durch den Benutzer auswählbar ist.

5. Verfahren nach einem der Ansprüche 1 bis 4, **dadurch gekennzeichnet, dass** auf dem Träger (D) ein vorbestimmbare Merkmale des Bildes codierender Verifikationscode (V) appliziert wird.

6. Verfahren nach einem der Ansprüche 1 bis 5, **dadurch gekennzeichnet, dass** der Identifikationscode (C) mittels einem Scanner, einem Keybord, einem magnetischen, elektromagnetischen oder elektrooptischen Leser erfasst wird.

7. Verfahren nach einem der Ansprüche 1 bis 6, **dadurch gekennzeichnet, dass** das digitale Bild via Datenleitungen (19) von der Aufnahmevorrichtung (10) zum zentralen Speichermedium (11) und/oder vom zentralen Speichermedium (11) zur Dokumentenausgabevorrichtung (20) übertragen wird.

8. Vorrichtung (9) zum Applizieren eines Bildes auf einen Träger, vorzugsweise auf ein Dokument (D),
mit wenigstens einer Aufnahmevorrichtung (10) zum Erzeugen eines digitalen Bildes und mit wenigstens einer Dokumentausgabevorrichtung (20) zum Applizieren des digitalen Bildes (I) auf einem Träger,
wobei die Aufnahmevorrichtung (10)
- Mittel (15) zum Erzeugen des digitalen Bildes,
- Mittel (17) zum Erzeugen und Zuordnen eines für das digitale Bild einzigartigen Identifikationscodes (C), und
- Mittel (12) zum Ausgeben des Identifikationscodes (C) aufweist,
wobei die Dokumentenausgabevorrichtung (20)
- eine Erfassungsanordnung (21) zum Erfassen des Identifikationscodes (C) aufweist,
wobei die Vorrichtung (9) zum Applizieren eines Bildes auf einen Träger **dadurch gekennzeichnet ist,**
**daß** die Aufnahmevorrichtung (10)
- ein Speichermedium (11), und
- Mittel zum Speichern des digitalen Bildes in dem Speichermedium (11) aufweist,
**daß** die Dokumentenausgabevorrichtung (20)
- Mittel (22) zum Einlesen des digitalen Bildes vom Speichermedium (11) in die Dokumentenausgabevorrichtung (20), und
- und Mittel (23) zum Applizieren des dem Identifikationscode (C) zugeordneten Bildes auf einen Träger aufweist,
**daß** die Aufnahmevorrichtung (10) und die Dokumentenausgabevorrichtung (20) mit dem Speichermedium (11) verbunden oder verbindbar sind.

9. Vorrichtung nach Anspruch 8, **dadurch gekennzeichnet, dass** die Mittel zum Aufbringen des Bildes auf den Träger aus einem Drucker (23), insbesondere aus einem Thermodrucker, Tintenstrahldrucker oder einem Laserdrucker bestehen.

10. Vorrichtung nach einem der Ansprüche 8 oder 9, **dadurch gekennzeichnet, dass** die Mittel zum Ausgeben des Identifikationscodes (C) aus einem Drucker (12), einem Bildschirm (14) oder einem Laufwerk zum Beschreiben eines Datenträgers bestehen.

11. Vorrichtung nach einem der Ansprüche 8 bis 10, **dadurch gekennzeichnet, dass** die Aufnahmevorrichtung (10) einen Monitor (14) zum Anzeigen eines Videobildes aufweist, wobei die Aufnahmevorrichtung (10) ausserdem vorzugsweise Mittel zum Fixieren des Videobildes aufweist.

12. Vorrichtung nach einem der Ansprüche 8 bis 11, **dadurch gekennzeichnet, dass** die Erfassungsanordnung ein Scanner (21) ist.

13. Vorrichtung nach einem der Ansprüche 8 bis 12, **dadurch gekennzeichnet, dass** die Aufnahmevorrichtung (10) und die Dokumentenausgabevorrichtung (20) direkt oder indirekt über Datenleitungen (19) miteinander und/oder mit dem Speichermedium (11) verbindbar sind.

## Claims

1. A method for applying a picture onto a carrier, preferably onto a document (D), **characterised by** the steps:
- producing a digital picture by way of a recording device (10),
- storing the digital picture in a storage medium (11)
- producing and allocating an identification code (C) unique to the digital picture
- issuing the identification code (C) by way of code issuing means (12)
- acquiring the identification code (C) with an acquisition arrangement (21) in a document issuing device (20)
- reading the digital picture allocated to the identification code from the storage medium (11) into the document issuing device (20)
- applying the digital picture (I) onto the carrier by way of the document issuing device (20).

2. A method according to claim 1, **characterised in that** the digital picture (I) is printed onto the carrier, wherein preferably simultaneously an additional print (A) is deposited onto the carrier.

3. A method according to one of the the claims 1 or 2, **characterised in that** the identification code (C) is printed out as a bar-code, number code or is displayed as a number code on a monitor or is outputted as a magnetic or electromagnetic or electro-optical code on a data carrier.

4. A method according to one of the claims 1 to 3, **characterised in that** the digital picture in the recording device (10) is displayed as a video picture on a monitor (14), wherein the point in time for storing a desired picture can be selected by the user.

5. A method according to one of the claims 1 to 4, **characterised in that** on the carrier (D) there is applied a verification code (V) coding predeterminable features of the picture.

6. A method according to one of the claims 1 to 5, **characterised in that** the identification code (C) is acquired by way of a scanner, a keyboard, a magnetic, electromagnetic or electro-optical reader.

7. A method according to one of the claims 1 to 6, **characterised in that** the digital picture via data leads (19) is transmitted from the recording device (10) to the central storage medium (11) and/or from the central storage medium (11) to the document issuing device (20).

8. A device (9) for applying a picture onto a carrier, preferably onto a document (D),
with at least one recording device (10) for producing a digital picture
and with at least one document issuing device (20) for applying the digital picture (I) on a carrier,
wherein the recording device (10) comprises
- means (15) for producing a digital picture,
- means (17) for producing and allocating an identification code (C) unique to the digital picture and
- means (12) for issuing the identification code (C),
wherein the document issuing device (20) comprises
- an acquisition arrangement (21) for acquiring the identification code (C)
- means (22) for reading the digital picture from the central storage medium (11) into the document issuing device (20)
- and means (23) for applying the picture allocated to the identification code (C) onto a carrier and
wherein the recording device (10) and/or the document issuing device (20) are connected or connectable to a storage medium (11).

9. A device according to claim 8, **characterised in that** the means for depositing the picture onto the carrier consists of a printer (23), in particular a thermoprinter, an ink jet printer or a laser printer.

10. A device according to one of the claims 8 or 9, **characterised in that** the means for issuing the identification code (C) consist of a printer (12), of a monitor (14) or of a drive for writing onto a data carrier.

11. A device according to one of the claims 8 to 10, **characterised in that** the recording device (10) comprises a monitor (14) for displaying a video picture, wherein the recording device (10) furthermore preferably comprises means for freezing the video picture.

12. A device according to one of the claims 8 to 11, **characterised in that** the acquisition arrangement (21) is a scanner.

13. A device according to one of the claims 8 to 12, **characterised in that** the recording device (10) and the document issuing device (20) are connectable directly or indirectly via data leads (19) to one another and/or to the storage medium (11).

## Revendications

1. Procédé pour appliquer une image sur un support, de préférence sur un document (D), comprenant les étapes suivantes, dans l'ordre indiqué :
- production d'une image numérique à l'aide d'une installation de photographie (10),
- mise en mémoire de l'image numérique dans un support de mémoire (11) auquel l'installation de photographie (10) et un dispositif d'émission de document (20) ont tous les deux accès,
- production et affectation d'un code d'identification (C) unique pour l'image numérique,
- émission du code d'identification (C) à l'aide de moyens d'émission de code (12),
- enregistrement du code d'identification émis (C) à l'aide d'un dispositif d'enregistrement (21) dans le dispositif d'émission de document (20),
- introduction de l'image numérique affectée au code d'identification (C) dans le dispositif d'émission de document (20), à partir du support de mémoire (11),
- application de l'image numérique introduite (I) sur le support à l'aide du dispositif d'émission de document (20).

2. Procédé selon la revendication 1, **caractérisé en ce que** l'image numérique (I) est imprimée sur le support, une impression supplémentaire (A) étant appliquée en même temps, de préférence, sur ledit support.

3. Procédé selon la revendication 1 ou 2, **caractérisé en ce que** le code d'identification (C) est imprimé sous la forme d'un code à barres, d'un code à chiffres ou est affiché sur un écran sous la forme d'un code à chiffres ou est émis sur un support de données sous la forme d'un code magnétique ou électromagnétique ou électro-optique.

4. Procédé selon l'une des revendications 1 à 3, **caractérisé en ce que** l'image numérique contenue dans l'installation de photographie (10) s'affiche sous la forme d'une image vidéo sur un écran (14), le moment de la mise en mémoire d'une image souhaitée pouvant être choisi par l'utilisateur.

5. Procédé selon l'une des revendications 1 à 4, **caractérisé en ce qu'**un code de vérification (V) codant des caractéristiques aptes à être prédéfinies de l'image est appliqué sur le support (D).

6. Procédé selon l'une des revendications 1 à 5, **caractérisé en ce que** le code d'identification (C) est enregistré à l'aide d'un scanner, d'un clavier ou d'un lecteur magnétique, électromagnétique ou électro-optique.

7. Procédé selon l'une des revendications 1 à 6, **caractérisé en ce que** l'image numérique, par l'intermédiaire de lignes de données (19), est transférée de l'installation de photographie (10) vers le support de mémoire central (11) et/ou du support de mémoire central (11) vers le dispositif d'émission de document (20).

8. Dispositif (9) pour appliquer une image sur un support, de préférence sur un document (D),
comportant au moins une installation de photographie (10) pour produire une image numérique, et au moins un dispositif d'émission de document (20) pour appliquer l'image numérique (I) sur un support,
l'installation de photographie (10) comportant
- des moyens (15) pour produire l'image numérique,
- des moyens (17) pour produire et affecter un code d'identification (C) unique pour l'image numérique, et
- des moyens (12) pour émettre le code d'identification (C),
et le dispositif d'émission de document (20) comportant
- un dispositif d'enregistrement (21) pour enregistrer le code d'identification (C),
le dispositif (9) pour appliquer une image sur un support étant **caractérisé en ce que** l'installation de photographie (10) comporte
- un support de mémoire (11) et
- des moyens pour mettre en mémoire l'image numérique dans le support de mémoire (11),
**en ce que** le dispositif d'émission de document (20) comporte
- des moyens (22) pour introduire l'image numérique dans le dispositif d'émission de document (20) à partir du support de mémoire (11), et
- des moyens (23) pour appliquer sur un support l'image affectée au code d'identification (C),
et **en ce que** l'installation de photographie (10) et le dispositif d'émission de document (20) sont reliés ou aptes à être reliés au support de mémoire (11).

9. Dispositif selon la revendication 8, **caractérisé en ce que** les moyens pour appliquer l'image sur le support se composent d'une imprimante (23), en particulier une imprimante thermique, une imprimante à jet d'encre ou une imprimante laser.

10. Dispositif selon la revendication 8 ou 9, **caractérisé en ce que** les moyens pour émettre le code d'identification (C) se composent d'une imprimante (12), d'un écran (14) ou d'une unité de disque pour écrire sur un support de données.

11. Dispositif selon l'une des revendications 8 à 10, **caractérisé en ce que** l'installation de photographie (10) comporte un écran (14) pour visualiser une image vidéo, l'installation de photographie (10) comportant aussi, de préférence, des moyens pour fixer l'image vidéo.

12. Dispositif selon l'une des revendications 8 à 11, **caractérisé en ce que** le dispositif d'enregistrement est un scanner (21).

13. Dispositif selon l'une des revendications 8 à 12, **caractérisé en ce que** l'installation de photographie (10) et le dispositif d'émission de document (20) sont aptes à être reliés entre eux et/ou au support de mémoire (11) directement ou indirectement grâce à des lignes de données (19).
